# NEW EUROPEAN PATENT SPECIFICATION

(11) **EP 2 361 704 B2**
(45) Date of publication and mention of the opposition decision: **02.10.2019**
(45) Mention of the grant of the patent: 02.01.2013
(21) Application number: 10154811.3
(22) Date of filing: 26.02.2010
(51) Int. Cl.: B22F 3/105, C22C 29/06, C22C 32/00, C22C 33/02

(54) **Metal multiphase material and manufacturing method therefore**
Metallisches Multiphasenmaterial und Herstellungsverfahren dafür
Matériau métallique multiphase et son procédé de fabrication

(43) Date of publication of application: 31.08.2011
(73) Proprietor: VBN Components AB, 752 28 Uppsala (SE)
(72) Inventor: BESTE, Ulrik, SE-743 71, BJÖRKLINGE (SE); VIKNER, Peter, SE-753 24, UPPSALA (SE); NILSSON, Martin, SE-752 40, UPPSALA (SE)
(74) Representative: Brann AB

(56) References cited:
- WO-A1-00/63455
- WO-A1-03/069004
- GB-A- 1 313 981
- US-A- 4 323 756
- US-A- 5 156 697
- US-A1- 2002 139 454
- US-A1- 2002 160 223
- YILBAS B S ET AL: "Laser alloying of metal surfaces by injecting titanium carbide powders" INTERNATIONAL JOURNAL OF MACHINE TOOLS AND MANUFACTURE 1989, vol. 29, no. 4, 1989, pages 499-503, XP002590548 DOI: DOI:10.1016/0890-6955(89)90067-9
- KRAPOSHIN V S: "Supersaturated solid solutions of carbon in Fe, Co and Ni: correlation with carbide stability" INTERNATIONAL JOURNAL OF NON-EQUILIBRIUM PROCESSING A B ACADEMIC PUBLISHERS UK, vol. 10, no. 3-4, 1998, pages 333-338, XP8124034 ISSN: 1368-9290

## Description

### TECHNICAL FIELD

The present invention relates in general to metal multiphase materials and manufacturing methods therefore and in particular to such materials having carbides in a metal matrix.

### BACKGROUND

Hard and multiphase materials such as cemented carbide, high speed steel, stellite or similar are used in a large number of applications such as wear parts and tools. The properties of such materials are typically defined by a high hardness and high content of hard phase and thus a high wear resistance. The hard phase is typically represented in these materials by a high content of carbides and this hard phase is surrounded by a matrix material such as Fe, Co, Ni, etc, and alloys and phases thereof. The matrix material is also typically hard, but is typically produced to achieve a desired balance to other important properties such as corrosion resistance and fracture toughness.

In these kinds of materials, the properties are settled by the constituent elements, the microstructure and the sizes and level of carbides. In addition, some properties are also determined by the content of foreign matter, by the so called *non-metallic inclusions.* The level of non-metallic inclusions is typically low, but still the brittle nature of these hard materials leads to the fact that some properties (especially fracture toughness, impact toughness and fatigue resistance) of these materials are very sensitive for these non-metallic inclusions. Typically, a component could have very high yield strength and hardness, but in practical use, the largest inclusion sets the limit for the impact toughness and fatigue. That is; high quality materials of today see their limit in the amount of the small, but still existing, inclusions by foreign matter. The inclusions act as stress concentrations due to different binding nature of inclusions and surrounding microstructure material, especially if they have a size that is larger than other microstructure variations.

The carbides in these multiphase materials are, as mentioned above, very important for the wear resistance, and the size of the carbides in the microstructure is determining the wear resistance level. Firstly, a high level of carbides in the material gives a high wear resistance. Secondly, the coarser carbides in the material, the higher the wear resistance achieved. However, a high level of big (coarse) carbides in the composition is also detrimental for the fracture toughness of the material. This is due to the fact that the maximum fracture toughness of a material is obtained when the microstructure is fully homogenous, and that coarse carbides in such structure will act as a stress concentration and thus also an initiation point for fracture. This is exactly the same stress concentration effect as mentioned above, where the inclusions where the problem. Therefore, it is desired to produce a material with high carbide content but with fine carbide size, to achieve a wear resistant material that also has enough high fracture toughness. It is both important with fine carbides, but even more important with a small size of the largest carbide found in the whole structure of the component.

These hard and multiphased materials described above could mainly be manufactured by a conventional route, by a powder manufacturing (PM) route or by a sintering technique.

In short, the conventional way of producing metal materials is to melt compositions of elements together and fill them in ingots, where they solidify. The ingots are then forged and rolled to the desired geometrically form such as rods, bars, sheets etc. The PM route (Powder Manufacturing route) is a development of the old conventional route for producing materials. In the PM route, the molten metal of desired composition is first "atomised" into a metal powder. This metal powder is then filled into containers, which in turn are being consolidated by high pressure and temperature. The consolidated containers are afterwards forged and rolled to the desired form in the same way as a conventional ingot. Since a PM material is a result of small powder-sized ingots which have been consolidated into a new material, the microstructure of the PM material is finer, with also a finer carbide size. This results in a material with better properties in general, due to the homogeneity, finer carbides and grains and it is also possible to produce materials with the PM route which cannot be produced the conventional way.

Sintering techniques have been used for a long time, where the goal is to manufacture components in hard materials. At ordinary sintering, a material powder (and often a binder) is pressed together to form a "green body". This green body is then placed in a furnace and a heat treatment (with a temperature lower than the melting temperature of the material, the solidus temperature) is performed.

A very common material produced by sintering technique is cemented carbide (hartmetalle, hardmetall), where a mix of WC and Co powder is milled together with the binder polyethylene glycol (PEG). After this milling, the mix is spray dried into a powder of agglomerates. This powder is pressed into green bodies and are then sintered (heat treated) into the final material. The result is a material with hard WC grains bounded together in a matrix of Co. The advantage with this WC/Co material type is that is has a unique combination of hardness and toughness, but the disadvantages are also obvious: a very complicated manufacturing process is necessary and very large production series is needed to achieve a low component price. In addition, this process does not allow advanced geometries without extensive after-treatment, and despite the quite high toughness, the toughness is still too low for a large number of applications.

Inclusions in a material are results from the production process, conventional route, PM route or sintering. Typically, the inclusions could be small residuals of unwanted elements from the scrap used in the raw material melting, particles from furnace walls that are released during the melting process, or in particular the always existing oxidation of molten or hot material during processing, or from other parts of the production process.

The typical sintering techniques according to prior art all have in common that they result in bad material properties such as low purity, high porosity, solidification patterns (segregations), coarse carbides and nitrides, and coarse microstructure. This sintering process results typically in a porous material with uncontrolled carbon content, and also often residuals of the binder. It is also possible to perform sintering at temperatures above the solidus temperature to achieve a material with lower porosity, but instead a coarser micro structure is achieved, due to the long solidification time, and thus also coarse carbides and/or nitrides.

In addition, to produce components in these hard multiphase materials, the machining methods of today are very time-consuming and energy-consuming, and the methods results in great wear on the tools used. In addition, these operations also have a major drawback, which is the need for removing a lot of full quality material by machining, before achieving the final component shape. That is, it is difficult to produce a component in these materials, and the more complicated geometry needed, the harder it is.

The only way according to prior art of producing components with the desired properties mentioned here (high carbon content, low oxygen levels, high purity, no porosity) is to use a PM material bar which have been HIPed (Hot Isostatic Pressure), forged and rolled, and to machine this bar to the desired form. However, even if using forged and rolled PM materials, the components will still have some inclusions, and not the extremely low oxygen level that is needed.

In the published international patent application WO 03/069004 A1, a high chromium and carbide rich tool steel is disclosed, The teel comprises at least 0.3 weight-% of carbon, an oxygen content of down to 37 ppm and µm-sized carbides. The products are manufactured by powder technology, preferable HIP compaction.

There exist a handful number of successful techniques for cleaning the PM materials further by improving powder production processes, but there exists only one technique for reducing the devastating oxygen content to the extremely low levels, a technique called VIM/VAR. VIM/VAR stands for Vacuum Inducted Melting/Vacuum Arc Remelted. In VIM/VAR, a large piece of high purity material is remelted by electrical eddy current in vacuum, and the process can refine an already pure material to very clean levels. However, the technique is not possible to use for materials with high carbide contents, where the aim is to have a small carbide size, since the large melt pool used lead to long solidification time and thus to too coarse carbides in the microstructure and/or carbide stringers.

In the published international patent application WO 00/63455, an engineering steel and rolling bearing component is disclosed. By presence of molybdenum and a special heat treatment, an ultra fine bainitic structure is achieved. The engineering steel comprises 0.9-1.0 % by weight of carbon and as carbide size lengths of 250 nm, where the small carbide sizes are a result of the Si content. No oxygen content of the final engineering steel is given.

In the published US patent application 2002/0139454 A1, a rolling bearing and method of making the same is disclosed. In presented comparative samples, steel with 0.62 and 0.68 % by weight, oxygen content of 4 and 9 ppm and carbide lengths of 1.13 and 2.15 um, respectively, are presented. It is also concluded that when the C content is too high, the amount of coarse carbides increase, so that the quiet, machinability and corrosion resistance thereof are deteriorated The C content of the steel according to the invention is therefore not more than 0.6 % buy weight,

In the published US patent application 2002/0160223 A1, an anti-friction bering is disclosed. The bearine is manufactured by a steel composed of 0.6-0.75 % of C by weight, less than 10 ppm oxygen and eutectic carbide particles of 10 um or less.

In the US patent 5,156,697, selective laser sintering of parts by compound formation of precursor powders is disclosed. The method selectively sinters a layer of powder to produce a part comprising a plurality of sintered layers. The laser beam is scanned over a layer of powder and the beam is switched on to sinter only the powder within boundaries of a desired cross-section of a part to be produced. Preferably, the powder comprises a plurality of materials having different dissociation or bonding temperatures.

### SUMMARY

A general object of the present invention is to enable production of a clean metal matrix material with high hardness and high carbide content of fine carbides which also is extremely clean from non metallic inclusions and gases. A further object of the present invention is to provide efficient methods for forming of objects in such material.

The above mentioned objects are achieved by materials and manufacturing methods according to the enclosed patent claims. The general object is achieved by the independent claims. Useful embodiments of the invention are specified by the independent claims. In general words, in a first aspect, a metallic multiphase material comprises a metal matrix, carbides embedded in the metal matrix. A maximum size of the carbides is less than 20 µm. The metallic multiphase material has carbon content in the range of 0.8 % by weight to 3.5 % by weight and oxygen content less than 30 ppm by weight.

In a second aspect, a method for manufacturing of a metallic multiphase material comprises provision of a powder of an initial metallic multiphase material. The initial metallic multiphase material comprises a metal matrix in which carbides are embedded. The initial metallic multiphase material has carbon content in the range of 0.8 % by weight to 3.5 % by weight.

The powder of the initial metallic multiphase material is placed in an oxygen-free environment. The powder of the initial metallic multiphase material is melted locally in a first portion by exposing the first portion of the powder of the initial metallic multiphase material to an energy beam during a first time period. The local melting allows at least a part of an oxygen content of the melted initial metallic multiphase material to react with carbon of the melted initial metallic multiphase material into oxides of carbon, giving a final metallic multiphase material in the first portion having oxygen content less than 30 ppm by weight and having a maximum size of said carbides less than 20 um. The final metallic multiphase material is then solidified.

In a third aspect, a method for manufacturing of an object of a metallic multiphase material manufactured according to the second aspect comprises that when the powder of the initial metallic multiphase material is placed in an oxygen-free environment, a thin layer of the initial metallic multiphase material is provided. The repetition of the melting and the solidifying comprises moving of the energy beam over an area of the thin layer melting and solidifying the initial metallic multiphase material in the area into a common body.

One advantage with the present invention is that it allows production of a clean low oxygen material with fine carbide structure direct from a material powder with specified composition. Furthermore, the technique also allows free form production direct from metal powder in hard multiphase materials, which especially could be used for production of very complex geometries.

### BRIEF DESCRIPTION OF THE DRAWINGS

The invention, together with further objects and advantages thereof, may best be understood by making reference to the following description taken together with the accompanying drawings, in which:
FIG. 1A illustrates a flow diagram of steps of an embodiment of a method according to the present invention;
FIG. 1B illustrates a flow diagram of steps of another embodiment of a method according to the present invention;
FIG. 2 shows a schematic cross section of an embodiment of an arrangement which could be used to produce products according to the present invention;
FIG. 3 shows a schematic cross section of another embodiment of an arrangement which could be used to produce products according to the present invention, where the new material is added on top of already pre-produced details; and
FIG. 4A-D shows schematically objects having negative surfaces and/or channels.

### DETAILED DESCRIPTION

Throughout the drawings, the same reference numbers are used for similar or corresponding elements.

The growth of carbides takes place during solidification of the molten metal material. In order to limit the carbide growth, the time spent for solidification has to be limited. The time for heating a volume of material can easily be made short by exposing the volume for a high-energy source. The rate of cooling is, however, to a large part determined by the simple heat conduction to volumes of a colder temperature and of course by the temperature of such colder volume. A small object is easier to cool than a large object, due to that the heat conduction has to be performed over longer distances in a large body. By locally melting one portion of a body at a time will thus typically result in that the time spent for solidification is decreased. The local melting can then be provided to the all parts of the object, separated in time. Since there are heating principles that operates with very concentrated energy flows, there are no problems to manage to achieve local melting of small size volumes.

The initial material of the volume intended to be melted has to be easily available for the heating operation and this is facilitated if the initial material is provided in a powder or sheet form. In the present invention, powder is utilized as a start material. By remelting an atomised powder of a multiphase material portion by portion, the time each portion spends at diffusion-promoting temperatures is limited. The locally melted portion is then allowed to solidify very quickly and to be cooled down to a temperature where diffusion is negligible or at least slow. This means that e.g. the carbides will have very limited possibilities to grow. At the same time, the melted portion can be attached to other already solidified portion of the final body, creating a solid possibly three-dimensional body.

Furthermore, by remelting atomized metal powder in a vacuum chamber or other oxygen-free environment, further oxidizing is mitigated. Such oxygen-free environment could also e.g. be an inert gas such as Ar or N₂. At the contrary, by remelting atomized metal powder, having a relatively high C content, in a vacuum chamber, a chemical reaction is achieved between metal bonded carbon and oxygen, which is used to further refine the material from oxygen. The typical main reaction gives carbon monoxide, (Cₘₑₜₐₗ + Oₘₑₜₐₗ → CO_{gas}), however, also other oxides of carbon may be produced. The oxygen content is thereby reduced even compared to the oxygen content of the powder. The exact position of this chemical reaction depends on the exact composition and the C content. A synergetic effect is thereby achieved upon the local melting of the powder.

The present disclosure relates in general to metallic multiphase material having a metal matrix. Preferably, the metal matrix is based on Fe, Co and/or Ni. Most common is Fe, on which a series of experiments has been performed. Co is used as a matrix for e.g. different stellites, which if they contain relatively large amounts of carbon will behave in a similar way as Fematrix materials. Ni matrix materials, in particular in combination with Cr are also of potential interest to be produced according to the principles of the present invention.

In all cases, carbides are embedded in the matrix. In order to achieve a high fracture toughness of the material, a maximum size of the carbides should be less than 20 µm. The size measure is defined as a maximum distance between two arbitrary points in the respective carbide grain. The amount of carbides should also be high enough to ensure a very high yield strength and hardness, and therefore, the metallic multiphase material should have carbon content in the range of 0.8 % by weight to 3.5 % by weight and most preferably in the range of 0.9 % by weight to 2.5 % by weight. This carbon content will also to a minor part be used for reducing the oxygen content during the manufacturing. By the presented ideas of manufacturing by local melting, the metallic multiphase material can obtain oxygen content less than 30 ppm by weight.

As mentioned above, different tests have been performed on various high speed steel metal powders. A typical example will be presented here below. However, the scope of the present invention should not be limited to this embodiment, which is only presented as a typical example of a material that can be produced. In this particular embodiment, a high speed steel metal power, containing approximately 2.2 - 2.4 % of weight of C and other alloying elements and Fe as a base matrix, has been used in a vacuum electro beam melting additive manufacturing machine ARCAM A2. Such methods will be discussed more in detail further below. This production machine was used in a series of tests to manufacture a number of different shapes and geometries of components. In a particular test, a large number of test bars with the dimension of 8 x 11 x 55 mm where simultaneously produced. The tests were repeated with different individual settings on the machine, depending on which type of powder layer that was molten and the present heat exchange with the chamber and the building plate. In particular, some of the processes took place at elevated temperature in the components to minimize thermal induced residual stress during building. A temperature of around 800°C was found to be low enough to prohibit too much carbide growth in the tested materials. The result was a material with well distributed carbides with a maximum size less than 20 µm in a metal matrix structure. The oxygen content of these bars was less than 30 ppm.

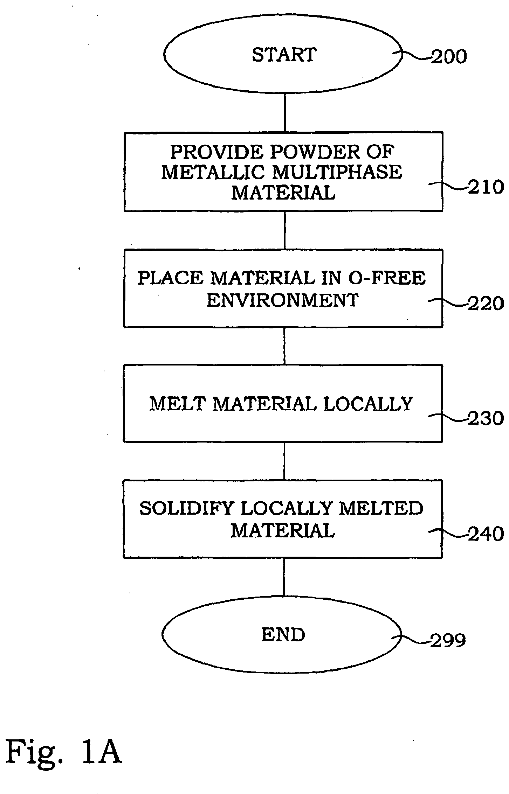

Fig. 1A illustrates a flow diagram of steps of an embodiment of a method according to the present invention. The method for manufacturing of a metallic multiphase material starts in step 200. In step 210, a powder material of an initial metallic multiphase material is provided. The initial metallic multiphase material comprises a metal matrix in which carbides are embedded. The initial metallic multiphase material has furthermore carbon content over 0.6 % by weight. The powder of the initial metallic multiphase material is in step 220 placed in an oxygen-free environment. The powder of the initial metallic multiphase material is locally melted in a first portion in step 230. This is performed by exposing the first portion of the powder of the initial metallic multiphase material to an energy beam during a first time period. The local melting allows at least a part of an oxygen content of the melted initial metallic multiphase material to react with carbon of the melted initial metallic multiphase material. The reaction produces oxides of carbon, typically carbon monoxide. The reaction results in a final metallic multiphase material in the first portion that has oxygen content less than 50 ppm by weight. In step 240, the final metallic multiphase material is solidified. The method ends in step 299.

The manufacturing technique described above have also the advantage that it can be directly utilized in the forming process of a final object. An embodiment of a manufacturing technique presented here below is based on free forming or additive manufacturing, which are common names for a production technique where you produce a component direct from free flowing material powder or a material wire, instead of machining a forged and rolled bar, as described above. The free forming could be performed in a number of different ways, depending mainly on which material that is needed, but also on the shape and size of the component to be built.

Free forming is today often associated to prototype manufacturing, since the components produced mostly has been for prototypes in low material quality. The free forming techniques have developed highly in the last years and today there exists both free forming of polymeric and metallic materials in larger series of enough quality in a row of specific applications.

One type of free forming of metallic materials is where a laser beam is used as heat source to melt powder layers in a controlled atmosphere. Typical companies doing this are EOSINT and Concept Laser. Another type of free forming of metallic materials is performed by an electron beam as the heat source, melting layers of metallic powder in vacuum (EBM). This technique is developed and patented by Arcam AB [Ref 1.]. For example, the EBM technique has also been patented to build amorphous materials [Ref 2]. In this patent, the EBM technology is used for the very quick solidification time on special element combinations, leading to an amorphous (or very small grained) microstructure.

The idea to test the EBM technique for free forming of high carbon content materials in vacuum was not obvious and a number of possible problems were seen.

Firstly, it is important to realize that a long process time at high temperature typically leads to a grain growth and a carbide growth in a material. In the EBM technique, the solidification time is very short, but the technique also requires a high temperature of the whole component during the process. It was expected that this high process temperature during a long build time would lead to a coarse microstructure with coarse carbides.

Secondly, it was expected that using EBM technique on these types of metal powder which always contain nitrogen (residuals from the gas atomization process of powder), would lead to nitrogen gas bubbling when the electron beam melts the powder, and that this gas bubbling would lead to porosity in the material after solidification.

To avoid these difficult expected problems, the EBM technique has been adjusted and the process has been developed to suit the high C content powders. This technique is described in the following claims in this patent.

This patent describes a material produced by a method, in which free flowing powders is used in an EBM free forming machine, where three dimensional details fully or partly could be produced in hard and multiphase materials.

As an alternative to EBM, methods utilizing laser heating can also be employed.

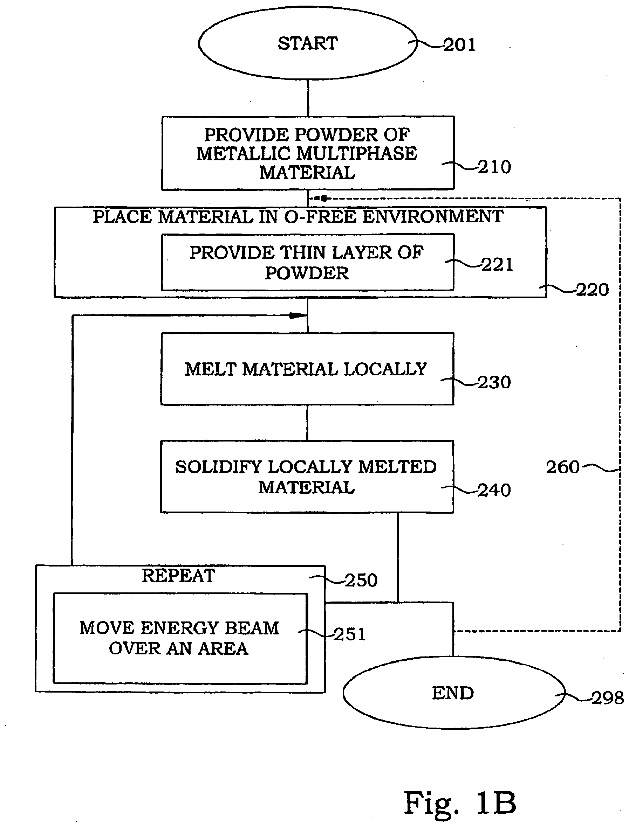

Fig. 1B illustrates a flow diagram of steps of another embodiment of a method according to the present invention. The method for manufacturing of an object of a metallic multiphase material starts in step 201. This method comprises all the steps 210, 220, 230 and 240 of the method for manufacturing of a metallic multiphase material of Fig. 1A. The step 220 comprises in this embodiment a step 221 in which a thin layer of the initial metallic multiphase material is provided in the oxygen-free environment. Furthermore, an additional step 250 of repeating the melting 230 and solidifying 240 steps for additional portions of the initial metallic multiphase material is provided. The step 250 also comprises a substep 251 in which the energy beam is moved over an area of the thin layer. This results in that the initial metallic multiphase material is melted and solidified in that area into a common solid body. Preferably, the process is repeated from step 220 as indicated by the broken arrow 260 until a complete object is achieved. The method is ended in step 298.

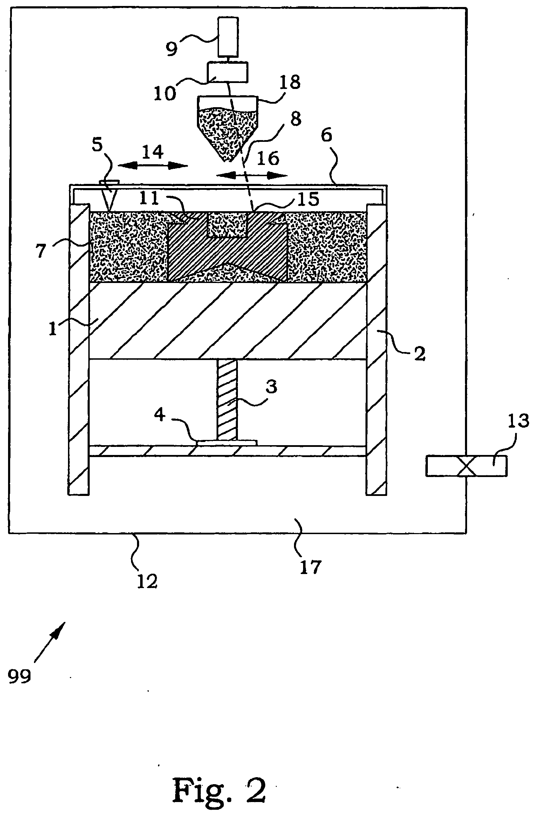

Figure 2 describes an embodiment of a configuration of a machine arrangement 99 possible to use to produce components or objects in this new material. The machine arrangement 99 comprises an adjustable working table 1, vertically movable and placed inside a bin 2. The vertical position of the working table 1 could be any and is typically controlled by a screw 3 and a screw-nut 4. A powder containing container 18 is arranged to add powder to the top of the present building. A powder rake 5 is arranged to be movable, as indicated by the arrow 14, forward and back in a chute 6 over the working table 1. The powder containing container 18 comprises powder of an initial metallic multiphase material. During the motion of the powder rake 5, the powder rake 5 distributes the metal powder layers 7 on top of any structures being present on the working table 1.

An energy beam canon 9, that e.g. could be a laser or an electron gun, generates an energy beam 8 of a high energy density. The energy beam 8 can therefore e.g. be a laser beam or an electron beam or a combination thereof. A beam controlling unit 10 focuses and positions the energy beam 8 to a particular spot 15 on the top of the powder layers 7. A controlling computer (not shown in Figure) controls the working table 1, the motion and distribution by the powder rake 5, the energy beam 8, and the beam controlling unit 10. The controlling computer can thereby move, as indicated by the arrow 16, the spot 15 over the surface of the metal powder layers 7. The melting and the following solidifying are thereby repeated for additional portions of the initial metallic multiphase material of the powder layer 7. At the same time, the energy density and focus of the energy beam 8 can be varied almost arbitrarily. The energy beam 8 is intended to cause a local melting of the metal powder 7 at the spot 15, and when the energy beam 8 is moved over the surface, a solid component 11 of the metallic multiphase material is successively built up. The controlling computer has information about the measures and geometries of the component 11 under construction, and for each powder layer it controls the heating/melting of the energy beam based on this information. When all parts of the metal powder 7 surface that should be integrated into the object to be manufactured are melted and solidified and thereby joined to a common body of the produced component 11, the powder containing container 18 releases new initial metallic multiphase material and the powder rake 5 is again moved over the working table 1, distributing a new layer of metal powder. The local melting and solidifying is reiterated on the layer of initial metallic multiphase material placed over the common body. This reiteration gives successively rise to a forming of a three-dimensional object or component 11.

All parts of this machine arrangement 99 are placed inside a chamber 12, where an oxygen-free environment 17, e.g. vacuum, could be maintained during the production process by use of the valve 13. The degree of vacuum has to be good enough to ensure that there is no substantial additional oxidation of the object to be manufactured. Alternatively, the chamber 12 could be filled with an atmosphere of an inert gas.

In an alternative embodiment, the motion of the energy beam could be caused by mechanical means, preferably controlled by the controlling computer.

The temperature of the component is, as indicated above, of importance. During the main time of the manufacturing, each portion of the component should be kept at a temperature low enough to limit the diffusion and thereby limit the growth of carbides. However, in order to get a good adhesion of melted material to the common three-dimensional body, the temperature should not be too cold. The temperature of the body under construction can be kept at a slightly elevated temperature. Such temperatures should, however, not give rise to any severe carbide growth during the manufacturing period. Such parameters for an optimized temperature are strongly dependent on a lot of factors, such as total manufacturing time, beam energy, beam size, material composition, size of the body, shape of the body etc. A higher substrate temperature, at least in the surface, can be obtained by scanning the energy beam over the surface of the powder layers for pre-heating of the powder, before the actual local melting takes place. An alternative method is to provide e.g. electrical heating of the working table. A lower substrate temperature can in a similar way be achieved by cooling the working table. Thereby, the final metallic multiphase material can be cooled in-situ at least during the solidification after the local melting. Furthermore, since it is to prefer that the complete manufactured component is kept in oxygen-free atmosphere until it has cooled down to temperatures significantly lower than the production temperature, it is also of benefit to be able to cool the final metallic multiphase material in situ after the entire manufacturing process has ended.

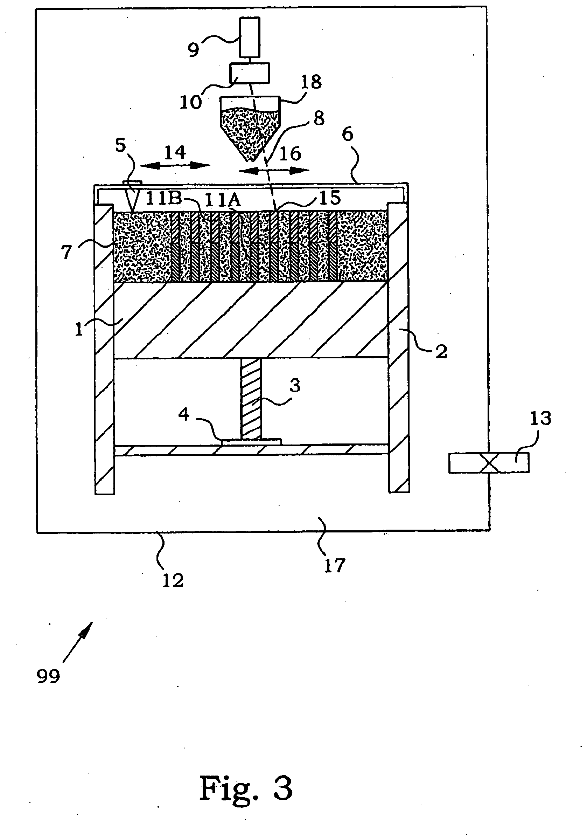

Figure 3 shows another embodiment of a machine arrangement 99 possible to use for manufacturing according to the present invention. In this embodiment pre-produced details 11A are placed on the working table 1. The pre-produced details 11A could be a base material of any kind made in another process, it can be a base material with another composition, or it can also be e.g. worn tools that should be rebuilt. In this embodiment, the pre-produced details 11A are thus positioned on the working table before the process starts and the volume up to the level of the first spot to add new material is filled with material, typically the metal powder. The new material 11B is then added on top of already existing substrate. In other words, the powder is placed on top of a solid support object, wherein the produced common body becomes attached to the support object. This support object could then be e.g. an object to be repaired. In such an embodiment, the controlling computer might also know position and material parameters of the pre-produced detail 11 a.

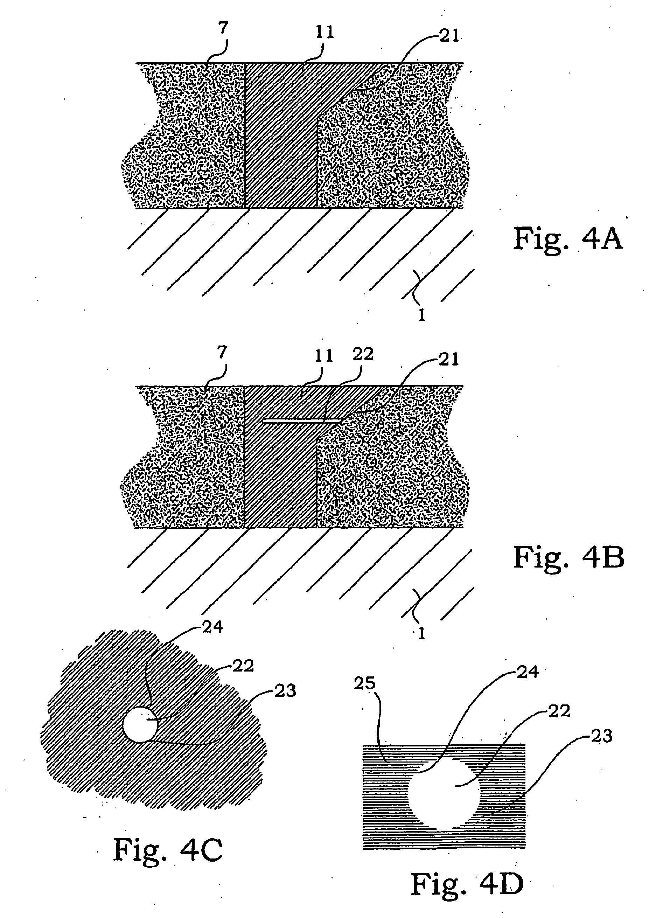

The embodiments of Fig. 2 and 3 can also utilize the same techniques to form components with negative surfaces. An example of negative surface is shown in Figure 4A. The working table 1 is shown, with a component 11 under construction on top. This component 11 has a negative surface 21. A negative surface is characterized in that a surface normal is directed downwards into a volume beneath the surface not comprising the same material as built in the component 11, i.e. typically unmelted metal powder. The method for creating such negative surfaces includes a procedure where the area over which the energy beam is moved for one iteration covers horizontal positions that are not covered by a corresponding area for a previous iteration. In this manner, any shape of an outer surface can be created. The possibility to create negative surface allows manufacturing of details having shaped surfaces with surface normal directions differing by more than 180 degrees.

Therefore, also holes and channels can be successfully formed by this technique, as illustrated in Fig. 4B. The component 11 of this embodiment comprises an internal channel 22. The channel is, as illustrated in cross-section in Fig. 4C, formed by successively adapt the area where the powder is melted to first build a curved positive surface 23. The channel 22 is then covered by a curved negative surface 24. Such channels are advantageously used e.g. for transporting cooling or heating media in the object during final use. Fig. 4D illustrates schematically different layers 25 together building the surface of the channel.

When using the technique described to build the new material, it is also obvious that the technique allows the building of several components (of the same type, or of different types) in the same chamber during the same run. It is only a work for the controlling computer to determine where to build, and it is obvious that it can be of one or several different components.

The new material produced with this technique could be used for any type of detail or component. It is also obvious that the components produced can also, in a later process step, be coated with any kind of suitable PVD or CVD coating.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A metallic multiphase material comprising:
a metal matrix;
said metal matrix is based on Co;
carbides embedded in said metal matrix;
a maximum size of said carbides being less than 20 µm;
said metallic multiphase material having a carbon content in the range of 0.8 % by weight to 3.5 % by weight,
**characterized in that** said metallic multiphase material having an oxygen content less than 30 ppm by weight .

2. A metallic multiphase material comprising:
a metal matrix;
said metal matrix is based on Ni;
carbides embedded in said metal matrix;
a maximum size of said carbides being less than 20 µm;
said metallic multiphase material having a carbon content in the range of 0.8 % by weight to 3.5 % by weight,
**characterized in that** said metallic multiphase material having an oxygen content less than 30 ppm by weight .

3. The metallic multiphase material according to claim 1 or 2, **characterized by** a carbon content in the range of 0.9 % by weight to 2.5 % by weight.

4. A method for manufacturing of a metallic multiphase material, comprising the step of:
providing (210) a powder of an initial metallic multiphase material;
said initial metallic multiphase material comprising a metal matrix, based on at least one of Fe, Co and Ni, in which carbides are embedded;
placing (220) said powder of said initial metallic multiphase material in an oxygen-free environment;
melting (230) said powder of said initial metallic multiphase material locally in a first portion by exposing said first portion of said powder of said initial metallic multiphase material to an energy beam during a first time period; and
solidifying (240) a final metallic multiphase material for giving said final metallic multiphase material a maximum size of said carbides less than 20 µm,
**characterized in that:**
said initial metallic multiphase material having a carbon content in the range of 0.8 % by weight to 3.5 % by weight;
said local melting in turn comprising the step of reducing an oxygen content of said final metallic multiphase material in said first portion to less than 30 ppm by weight by allowing at least a part of an oxygen content of said melted initial metallic multiphase material to react with carbon of said melted initial metallic multiphase material into oxides of carbon.

5. The method according to claim 4, **characterized in that** said energy beam is at least one of an electron beam and a laser beam.

6. The method according to claim 4 or 5, **characterized by** the further step of repeating (250) said step of melting (230) and said step of solidifying (240) for additional portions of said initial metallic multiphase material.

7. A method for manufacturing of an object of a metallic multiphase material manufactured according to claim 6, **characterized in that**
said step of placing (220) said powder of said initial metallic multiphase material in an oxygen-free environment comprises providing (221) of a thin layer of said initial metallic multiphase material; and
said step of repeating (250) said step of melting and said step of solidifying comprises moving (251) of said energy beam over an area of said thin layer melting and solidifying said initial metallic multiphase material in said area into a common body.

8. A method according to claim 7, **characterized by** reiterating said step of placing (220) said powder and said step of repeating (250), wherein said powder of said initial metallic multiphase material is placed over said common body, thereby forming a three-dimensional object.

9. A method according to claim 8, **characterized in that** a first said step of placing (220) said powder comprises placing said powder on top of a solid support object, wherein said common body becomes attached to said support object.

10. A method according to claim 8, **characterized in that** said area over which said energy beam is moved for an iteration covers horizontal positions that are not covered by a corresponding area for a previous iteration.

11. A method according to claim 10, **characterized by** creating channels for transport of cooling or heating media in said object.

## Patentansprüche

1. Metallisches Mehrphasenmaterial, umfassend:
eine Metallmatrix;
wobei die Metallmatrix auf Co basiert;
in die Metallmatrix eingebettete Karbide;
eine maximale Größe der Karbide von weniger als 20 µm;
wobei das metallische Mehrphasenmaterial einen Kohlenstoffgehalt im Bereich von 0,8 bis 3,5 Gewichtsprozent aufweist,
**dadurch gekennzeichnet, dass** das metallische Mehrphasenmaterial einen Sauerstoffgehalt von weniger als 30 ppm bezogen auf das Gewicht aufweist.

2. Metallisches Mehrphasenmaterial, umfassend:
eine Metallmatrix;
wobei die Metallmatrix auf Ni basiert;
in die Metallmatrix eingebettete Karbide;
eine maximale Größe der Karbide von weniger als 20 µm;
wobei das metallische Mehrphasenmaterial einen Kohlenstoffgehalt im Bereich von 0,8 bis 3,5 Gewichtsprozent aufweist,
**dadurch gekennzeichnet, dass** das metallische Mehrphasenmaterial einen Sauerstoffgehalt von weniger als 30 ppm bezogen auf das Gewicht aufweist.

3. Metallisches Mehrphasenmaterial nach Anspruch 1 oder 2, **gekennzeichnet durch** einen Kohlenstoffgehalt im Bereich von 0,9 bis 2,5 Gewichtsprozent.

4. Verfahren zur Herstellung eines metallischen Mehrphasenmaterials, umfassend den Schritt:
Bereitstellen (210) eines Pulvers eines metallischen Mehrphasenausgangsmaterials;
wobei das metallische Mehrphasenausgangsmaterial eine Metallmatrix umfasst, basierend auf mindestens einem aus Fe, Co und Ni, in die Karbide eingebettet sind;
Platzieren (220) des Pulvers des metallischen Mehrphasenausgangsmaterials in eine sauerstofffreie Umgebung;
lokales Schmelzen (230) des Pulvers des metallischen Mehrphasenausgangsmaterials in einem ersten Teil durch Aussetzen des ersten Teils des Pulvers des metallischen Mehrphasenausgangsmaterials gegenüber einem Energiestrahl während eines ersten Zeitabschnitts; und
Erstarren (240) eines metallischen Mehrphasenendmaterials, um dem metallischen Mehrphasenendmaterial eine maximale Größe der Karbide von weniger als 20 µm zu geben,
**dadurch gekennzeichnet, dass:**
das metallische Mehrphasenausgangsmaterial einen Kohlenstoffgehalt im Bereich von 0,8 bis 3,5 Gewichtsprozent aufweist;
wobei das lokale Schmelzen wiederum den Schritt des Reduzierens eines Sauerstoffgehalts des metallischen Mehrphasenendmaterials in dem ersten Teil auf weniger als 30 ppm bezogen auf das Gewicht umfasst, durch Erlauben mindestens eines Teils eines Sauerstoffgehalts des geschmolzenen metallischen Mehrphasenausgangsmaterials mit Kohlenstoff des geschmolzenen metallischen Mehrphasenausgangsmaterials in Oxide von Kohlenstoff zu reagieren.

5. Verfahren nach Anspruch 4, **dadurch gekennzeichnet, dass** der Energiestrahl zumindest ein Elektronenstrahl oder ein Laserstrahl ist.

6. Verfahren nach Anspruch 4 oder 5, **gekennzeichnet durch** den weiteren Schritt des Wiederholens (250) des Schrittes des Schmelzens (230) und des Schrittes des Erstarrens (240) für zusätzliche Teile des metallischen Mehrphasenausgangsmaterials.

7. Verfahren zum Herstellen eines Objekts aus einem metallischen Mehrphasenmaterial, das nach Anspruch 6 hergestellt ist, **dadurch gekennzeichnet, dass**
der Schritt des Platzierens (220) des Pulvers des metallischen Mehrphasenausgangsmaterials in einer sauerstofffreien Umgebung Bereitstellen (221) einer dünnen Schicht des metallischen Mehrphasenausgangsmaterials umfasst; und
der Schritt des Wiederholens (250) des Schrittes des Schmelzens und des Schrittes des Erstarrens Bewegen (251) des Energiestrahls über einen Bereich der dünnen Schicht sowie Schmelzen und Erstarren des metallischen Mehrphasenausgangsmaterials in dem Bereich zu einem gemeinsamen Körper umfasst.

8. Verfahren nach Anspruch 7, **gekennzeichnet durch** mehrmaliges Wiederholen des Schrittes des Platzierens (220) des Pulvers und des Schrittes des Wiederholens (250), wobei das Pulver des metallischen Mehrphasenausgangsmaterials über dem gemeinsamen Körper platziert wird, wodurch ein dreidimensionales Objekt gebildet wird.

9. Verfahren nach Anspruch 8, **dadurch gekennzeichnet, dass** ein erster Schritt des Platzierens (220) des Pulvers Platzieren des Pulvers oben auf einem festen Stützobjekt umfasst, wobei der gemeinsame Körper an das Stützobjekt angefügt wird.

10. Verfahren nach Anspruch 8, **dadurch gekennzeichnet, dass** der Bereich, über den der Energiestrahl für eine Iteration bewegt wird, horizontale Positionen abdeckt, die nicht von einem entsprechenden Bereich für eine vorherige Iteration abgedeckt sind.

11. Verfahren nach Anspruch 10, **gekennzeichnet durch** Erzeugen von Kanälen zum Transport von Kühl- oder Heizmitteln in dem Objekt.

## Revendications

1. Matériau multiphasé métallique comprenant :
une matrice métallique ;
ladite matrice métallique est basée sur Co ;
des carbures incorporés dans ladite matrice métallique ;
une taille maximale desdits carbures étant inférieure à 20 µm ;
ledit matériau multiphasé métallique ayant une teneur en carbone comprise dans la plage allant de 0,8 % en poids à 3,5 % en poids,
**caractérisé en ce que** ledit matériau multiphasé métallique a une teneur en oxygène inférieure à 30 ppm en poids.

2. Matériau multiphasé métallique comprenant :
une matrice métallique ;
ladite matrice métallique est basée sur Ni ;
des carbures incorporés dans ladite matrice métallique ;
une taille maximale desdits carbures étant inférieure à 20 µm ;
ledit matériau multiphasé métallique ayant une teneur en carbone comprise dans la plage allant de 0,8 % en poids à 3,5 % en poids,
**caractérisé en ce que** ledit matériau multiphasé métallique a une teneur en oxygène inférieure à 30 ppm en poids.

3. Matériau multiphasé métallique selon la revendication 1 ou 2, **caractérisé par** une teneur en carbone comprise dans la plage allant de 0,9 % en poids à 2,5 % en poids.

4. Procédé de fabrication d'un matériau multiphasé métallique, comprenant les étapes de :
utilisation (210) d'une poudre d'un matériau multiphasé métallique initial ;
ledit matériau multiphasé métallique initial comprenant une matrice métallique, basée sur au moins l'un de Fe, Co et Ni, dans laquelle des carbures sont incorporés ;
placement (220) de ladite poudre dudit matériau multiphasé métallique initial dans un environnement exempt d'oxygène ;
fusion (230) de ladite poudre dudit matériau multiphasé métallique initial localement dans une première partie en exposant ladite première partie de ladite poudre dudit matériau multiphasé métallique initial à un faisceau d'énergie pendant une première période de temps ; et
solidification (240) dudit matériau multiphasé métallique final pour donner ledit matériau multiphasé métallique final avec une taille maximale desdits carbures inférieure à 20 µm
**caractérisé en ce que**
ledit matériau multiphasé métallique initial ayant une teneur en carbone comprise dans la plage allant de 0,8 % en poids à 3,5 % en poids,
ladite fusion locale comprenant à son tour l'étape de réduction d'une teneur en oxygène d'un matériau multiphasé métallique final dans ladite première partie à moins de 30 ppm en poids en permettant au moins à une partie d'une teneur en oxygène dudit matériau multiphasé métallique initial fondu de réagir avec le carbone dudit matériau multiphasé métallique initial fondu en oxydes de carbone.

5. Procédé selon la revendication 4, **caractérisé en ce que** ledit faisceau d'énergie est au moins un faisceau d'énergie choisi parmi un faisceau d'électrons et un faisceau laser.

6. Procédé selon la revendication 4 ou 5, **caractérisé par** l'étape supplémentaire de répétition (250) de ladite étape de fusion (230) et de ladite étape de solidification (240) pour des parties supplémentaires dudit matériau multiphasé métallique initial.

7. Procédé de fabrication d'un objet d'un matériau multiphasé métallique fabriqué selon la revendication 6, **caractérisé en ce que**
ladite étape de placement (220) de ladite poudre dudit matériau multiphasé métallique initial dans un environnement exempt d'oxygène comprend l'utilisation (221) d'une couche fine dudit matériau multiphasé métallique initial ; et
ladite étape de répétition (250) de ladite étape de fusion et de ladite étape de solidification comprend le déplacement (251) dudit faisceau d'énergie sur une zone de ladite couche fine, faisant fondre et solidifiant ledit matériau multiphasé métallique initial dans ladite zone en un corps commun.

8. Procédé selon la revendication 7, **caractérisé par** la répétition de ladite étape de placement (220) de ladite poudre et de ladite étape de répétition (250), dans lequel ladite poudre dudit matériau multiphasé métallique initial est placée sur ledit corps commun, formant ainsi un objet tridimensionnel.

9. Procédé selon la revendication 8, **caractérisé en ce qu'**une première desdites étapes de placement (220) de ladite poudre comprend le placement de ladite poudre sur le dessus d'un objet support solide, dans lequel ledit corps commun va s'attacher au dit objet support.

10. Procédé selon la revendication 8, **caractérisé en ce que** ladite zone sur laquelle ledit faisceau d'énergie est déplacé pour une itération couvre les positions horizontales qui ne sont pas couvertes par une zone correspondante pour une itération précédente.

11. Procédé selon la revendication 10, **caractérisé par** la création de canaux de transport d'un milieu de refroidissement ou de chauffage dans ledit objet.
